# FASCICULE DE BREVET EUROPEEN

(11) **EP 2 165 632 B1**
(45) Date de publication et mention de la délivrance du brevet: **16.05.2012**
(21) Numéro de dépôt: 09356053.0
(22) Date de dépôt: 21.09.2009
(51) Int. Cl.: A47J 43/046

(54) **Dispositif d'éjection d'un ensemble bol d'un bloc moteur de mixeur / batteur**
Auswurfvorrichtung eines Haushaltsgeräts, bestehend aus Schüssel und Motorblock eines Rühr- und Mixgeräts
Device for ejecting a bowl assembly from a blender motor unit

(30) Priorité: 23.09.2008 BR PI0803963
(43) Date de publication de la demande: 24.03.2010
(73) Titulaire: SEB S.A., 69130 Ecully (FR)
(72) Inventeur: Veneziano, José Carlos, CEP 13280-000 Vinhedo - SP (BR); Merlo, Wagner Angelo, CEP-04619-000 Bairro - Campo Belo - SP (BR)
(74) Mandataire: Kiehl, Hubert

(56) Documents cités:
- WO-A-00/13563
- US-A- 3 786 999

## Description

Cette invention décrit un dispositif d'éjection de l'ensemble bol sur un mixeur et/ou un batteur, dispositif composé de deux boutons superposés qui servent à désolidariser l'ensemble bol de la base de l'appareil.

### DESCRIPTION DE L'ÉTAT DE LA TECHNIQUE

Les mixeurs sont disposés sur les linéaires des magasins de façon à ce que les consommateurs aient accès au produit tout en pouvant imaginer leur utilisation ultérieure.

Un mixeur en particulier a été perfectionné permettant, à travers un bouton, de retirer le bol de la base de l'appareil lorsque ce bol est assemblé sur le bloc moteur.

Le bouton se trouve sur la face avant de l'appareil et le consommateur peut actionner le bouton afin de vérifier le fonctionnement du dispositif. Comme on l'a déjà mentionné auparavant, on ne peut enlever le bol de sa base que lorsque celui-ci est désaccouplé du bloc moteur afin de garantir la sécurité de l'utilisateur.

En conséquence, le consommateur est frustré car il ne parvient pas à visualiser le fonctionnement du produit s'il ne sait pas que l'on ne peut appuyer sur le bouton qu'après le désaccouplement de l'ensemble bol du bloc moteur.

### OBJECTIF DE L'INVENTION

Le but de la présente invention consiste donc à proposer un mixeur ou batteur remédiant à ces inconvénients.

A cet effet, l'invention se rapporte à un mixeur ou batteur comme défini dans la revendication 1.

### DESCRIPTION DES FIGURES

L'objet de l'invention sera décrit avec plus de précision sur les figures en annexe, qui représentent un mode de réalisation particulier à titre d'exemple non limitatif :
La figure 1 est une vue en perspective du bloc moteur du mixeur objet de cette invention.
La figure 2 est une première vue en coupe du mixeur objet de cette invention;
La figure 3 est une deuxième vue en coupe du mixeur objet de cette invention;
La figure 4 est une troisième vue en coupe du mixeur objet de cette invention;
La figure 5 est une quatrième vue en coupe du mixeur objet de cette invention;
La figure 6 est une cinquième vue en coupe du mixeur objet de cette invention;
La figure 7 est une sixième vue en coupe du mixeur objet de cette invention.

### DESCRIPTION DETAILLEE DE L'INVENTION

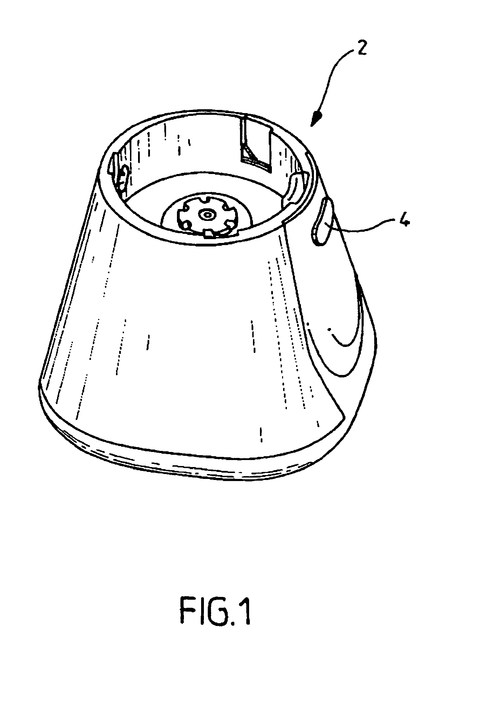

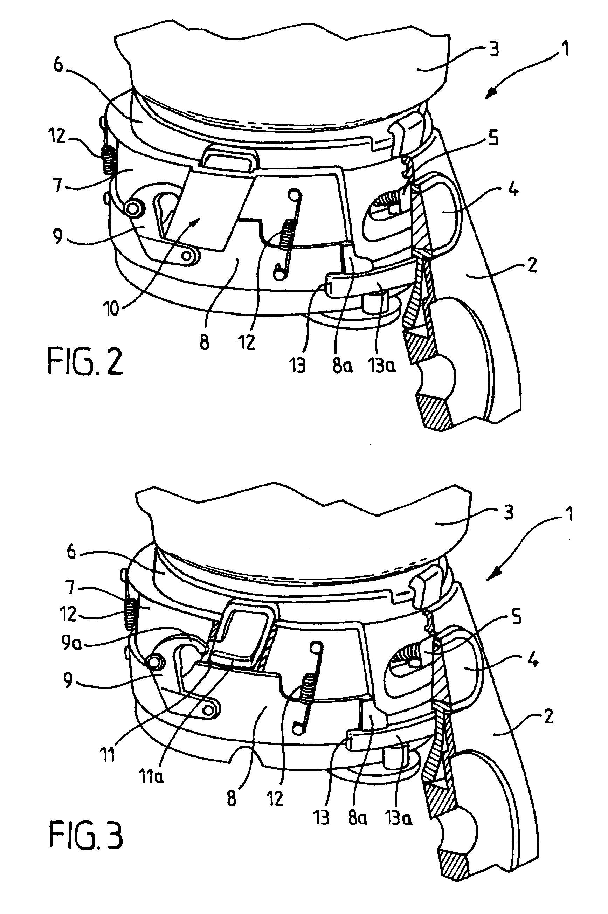

Comme on peut l'observer sur les figures 1 et 2, un mixeur 1 comprend un bloc moteur 2 et un ensemble bol 3 comportant une base 6. Le bloc moteur 2 possède un premier bouton 4 qui permet de séparer le bloc moteur 2 de l'ensemble bol 3 en l'éjectant suffisamment pour que l'utilisateur comprenne qu'il a été libéré.

Ce bouton 4 peut être transparent afin de pouvoir visualiser un deuxième bouton 5, disposé sur la base 6 du bol de façon concentrique par rapport au bouton 4.

Le dispositif permet à l'aide du premier bouton 4 transparent du bloc moteur 2, et/ou par le rebord du logement de réception du bloc moteur 2 dans lequel la base 6 du bol s'emboîte, d'observer l'existence du deuxième bouton 5, mais sans pouvoir y accéder sans retirer l'ensemble bol 3 du bloc moteur 2.

On obtient donc boutons superposés, un premier bouton 4 accessible sur le bloc moteur 2, qui sert à dégager l'ensemble bol 3 du bloc moteur 2 et un deuxième bouton 5 sur la base 6 du bol, seulement accessible après avoir retiré l'ensemble du bol 3 du bloc moteur 2, dégageant ainsi la base 6 du bol.

Le dispositif est composé d'un corps 7 et d'une bague mobile 8. Le corps 7 est relié à la bague mobile 8 à travers, de préférence, trois (ou plus) crochets 9 articulés, de façon à ce que lorsque l'on appuie sur la bague mobile, elle tourne et descend en un mouvement de rotation après le basculement simultané des trois crochets.

Lorsque la bague mobile est déplacée vers le bas, la bague mobile 8 descend toujours parallèlement au corps 7, et autour du canal existant sur la partie supérieure du bloc moteur 2, il existe trois cavités 10, visibles sur les figures 2, 4 et 6, qui reçoivent trois saillies 11 correspondantes, situées sur la base 6 du bol, ces saillies 11 étant visibles sur les figures 3, 5 et 7, où les cavités 10 sont représentés arrachées, et possédant une extrémité inférieure munie d'un rebord 11 a. Quand l'ensemble bol 3 n'est pas accouplé au bloc moteur 2, la bague mobile 8 est au repos, maintenu en position "haute" par l'action de trois ressorts 12, chacun d'eux agissant sur les crochets 9 articulés en les forçant à reculer, ainsi que cela est représenté sur les figures 2 et 3.

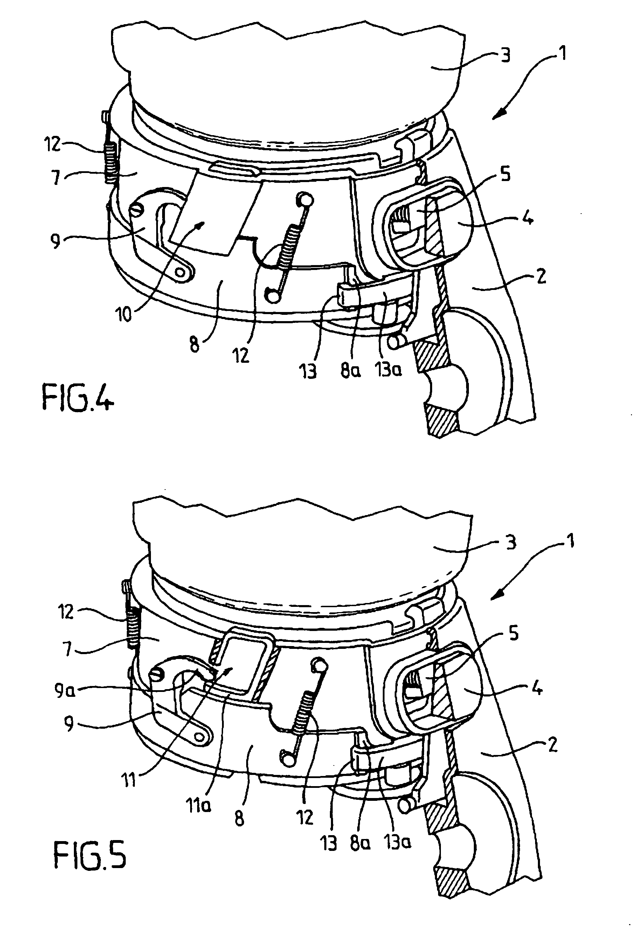

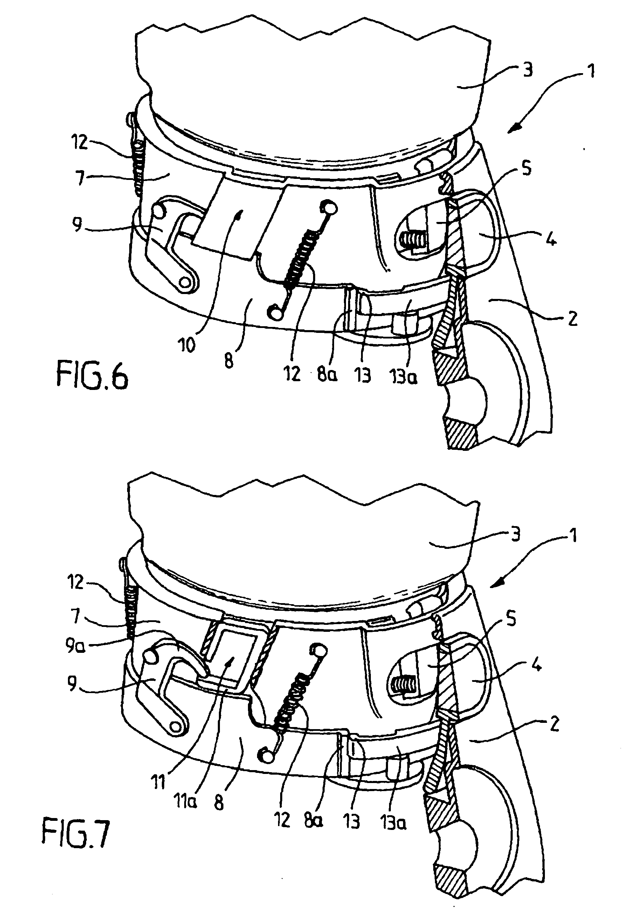

De cette façon, lorsque l'on accouple l'ensemble bol 3 au bloc moteur 2, les trois saillies 11 de la base 6 du bol descendent par les cavités 10 respectives du bloc moteur 2, en appuyant ses rebords 11a sur la bague mobile 8, la poussant ainsi vers le bas. Ce mouvement provoque le basculement des crochets 9 articulés, en ayant raison de la force des ressorts 12 et, par conséquent, fait aussi pivoter la bague mobile 8, comme nous l'avons déjà mentionné et ainsi que cela est illustré sur les figures 4 et 5 et sur les figures 6 et 7 correspondant respectivement à une position intermédiaire et à une position en fin de course dans la phase d'accouplement de la base 6 du bol sur le bloc moteur 2. L'extrémité supérieure des crochets 9 articulés a une forme de griffe 9a.

Lorsque les crochets 9 articulés basculent, leurs extrémités en forme de griffe 9a accrochent les rebords 11 a des saillies de la base 6 du bol en les retenant. À partir de là, la seule façon de relâcher les saillies 11 de la base 6 du bol est de permettre à la bague mobile 8 de tourner en sens inverse, pour revenir en position "haute", mais ceci n'a pas lieu spontanément car en arrivant en fin de course, la bague mobile 8 est retenue par un ergot 13 qui s'emboîte dans une dent 8a (saillie) de la bague mobile 8 en l'empêchant de tourner.

Ledit ergot 13 est articulé sur un axe intégré à la paroi du corps 7 et il est muni d'une tige flexible 13a qui agit comme ressort et le maintient en action contre la bague mobile 8. Lorsqu'on appuie sur le premier bouton 4 du bloc moteur 2, celui-ci comprime la tige flexible 13a qui fléchit et son extrémité active pivote pour libérer la bague mobile 8. Ainsi, les trois ressorts 12 forcent la bague mobile 8 à revenir sur sa position de repos, tout en surélevant également l'ensemble bol 3, dont le mouvement est visible pour celui qui a pressé le premier bouton 4 du bloc moteur 2.

De cette manière, le dispositif possède un grand nombre d'avantages, car il permet à l'utilisateur d'appuyer sur le premier bouton 4. Ainsi, il comprend que l'ensemble bol 3 bouge, et que l'action du premier bouton 4 a eu lieu.

Ultérieurement, il retire l'ensemble bol 3 et avec l'action du deuxième bouton 5, il sépare le bol 3 de la base 6 du bol, ayant accès aux lames du mixeur.

Le système de verrouillage de la base 6 sur le bol 3 au moyen du deuxième bouton 5 est conforme à celui décrit dans la demande de modèle d'utilité MU 8800469-4 déposée au Brésil par la société GRUPO SEB DO BRASIL PRODUTOS DOMÉSTICOS LTDA le 5 aout 2008.

Il doit être bien compris que ce que nous décrivons est un exemple de réalisation de l'invention; toutes les autres modifications et variations par rapport à cette description que les spécialistes dans la technique pourraient souhaiter sont considérées comme entrant dans le cadre et dans le champ d'application de cette invention conformément aux revendications suivantes.

## Revendications

1. Mixeur ou batteur comprenant un bloc moteur (2), un ensemble bol (3) comprenant une base (6) amovible et un dispositif d'éjection de l'ensemble bol (3), **caractérisé en ce que** ledit dispositif d'éjection comporte un premier bouton (4) accessible sur le bloc moteur (2), ledit premier bouton (4) servant à libérer l'ensemble bol (3) du bloc moteur (2), et un deuxième bouton (5) sur la base (6) du bol qui n'est accessible qu'après avoir retiré du bloc moteur (2) l'ensemble bol (3), et qui sert à libérer la base (6) du bol de l'ensemble bol (3).

2. Mixeur ou batteur selon la revendication 1, **caractérisé en ce que** le dispositif d'éjection est composé d'un corps (7) et d'une bague mobile (8) portés par le bloc moteur (2).

3. Mixeur ou batteur selon la revendication 2, **caractérisé en ce que** le corps (7) est relié à la bague mobile (8) par trois crochets (9) articulés, de manière à ce que lorsque la bague mobile est enfoncée, elle tourne et descend en un mouvement de rotation, après le basculement simultané des crochets (9) articulés.

4. Mixeur ou batteur selon la revendication 3, **caractérisé en ce que** sur la partie supérieure du bloc moteur (2) se trouvent trois cavités (10) qui reçoivent trois saillies (11) correspondantes présentes sur la base (6) du bol.

5. Mixeur ou batteur selon la revendication 4, **caractérisé en ce que** la bague mobile (8) est ramenée dans une position de repos, dite position "haute" sous l'action des trois ressorts (12), et **en ce que** lorsque la bague mobile (8) est en position "haute", chaque ressort (12) agit à travers la bague mobile (8) sur un des crochets (9) articulés en les forçant à reculer.

6. Mixeur ou batteur selon la revendication 5, **caractérisé en ce que** lorsque l'on accouple l'ensemble bol (3) au bloc moteur (2), les crochets (9) articulés basculent, leurs extrémités en forme de griffe (9a) accrochant les rebords (11a) des saillies (11) de la base (6) du bol en les retenant.

7. Mixeur ou batteur selon la revendication 6, **caractérisé en ce que**, en fin de course d'accouplement de l'ensemble bol (3) sur le bloc moteur (2), la bague mobile (8) est retenue par un ergot (13) qui s'emboite dans une dent (8a) en saillie de la bague mobile (8).

8. Mixeur ou batteur selon la revendication 7, **caractérisé en ce que** l'ergot (13) est articulé sur un axe intégré à la paroi du corps (7) et est équipé d'une tige flexible (13a) qui agit comme ressort et qui la maintient en action contre la bague mobile (8).

## Claims

1. A mixer or blender comprising a motor unit (2), a bowl assembly (3) comprising a removable base (6) and a device for ejecting the bowl assembly (3), **characterised in that** said ejection device contains a first button (4) accessible on the motor unit (2), said first button (4) being used to release the bowl assembly (3) from the motor unit (2), and a second button (5) on the base (6) of the bowl which is accessible only after removing the bowl assembly (3) from the motor unit (2) and which is used to release the base (6) of the bowl from the bowl assembly (3).

2. A mixer or blender according to claim 1, **characterised in that** the ejection device is composed of a body (7) and a movable ring (8) carried by the motor unit (2).

3. A mixer or blender according to claim 2, **characterised in that** the body (7) is connected to the movable ring (8) by three articulated hooks (9), such that when the movable ring is pressed, it rotates and moves down in a rotational movement, after the articulated hooks (9) swing out simultaneously.

4. A mixer or blender according to claim 3, **characterised in that** the upper part of the motor unit (2) has three cavities (10) which receive the corresponding three protrusions (11) present on the base (6) of the bowl.

5. A mixer or blender according to claim 4, **characterised in that** the movable ring (8) is brought to a rest position, called "high" position under the action of the three springs (12), and **in that** when the movable ring (8) is in "high" position, each spring (12) acts through the movable ring (8) on one of the articulated hooks (9) by forcing them to retract.

6. A mixer or blender according to claim 5, **characterised in that** when the bowl assembly (3) is coupled to the motor unit (2), the articulated hooks (9) swing out, their ends in the form of dawns (9a) latching on to the edges (11a) of the protrusions (11) on the base (6) of the bowl by retaining them.

7. A mixer or blender according to claim 6, **characterised in that**, at the travel end of the coupling of the bowl assembly (3) onto the motor unit (2), the movable ring (8) is retained by a pin (13) which fits into a tooth (8a) protruding from the movable ring (8).

8. A mixer or blender according to claim 7, **characterised in that** the pin (13) is hinged on an axis integrated into the wall of the body (7) and is equipped with a flexible rod (13a) which acts as a spring and which maintains it in action against the movable ring (8).

## Patentansprüche

1. Mixer oder Rührgerät, umfassend einen Motorblock (2), eine Behältereinheit (3) mit einer abnehmbaren Basis (6) und eine Vorrichtung zur Ausgabe der Behältereinheit (3), **dadurch gekennzeichnet, dass** die Ausgabevorrichtung eine erste Taste (4) umfasst, die auf dem Motorblock (2) zugänglich ist, wobei die erste Taste (4) zum Lösen der Behältereinheit (3) vom Motorblock (2) dient, und eine zweite Taste (5) auf der Basis (6) des Behälters, die nur nach Abnahme der Behältereinheit (3) vom Motorblock (2) zugänglich ist und die zum Lösen der Basis (6) des Behälters von der Behältereinheit (3) dient.

2. Mixer oder Rührgerät nach Anspruch 1, **dadurch gekennzeichnet, dass** die Ausgabevorrichtung aus einem Körper (7) und einem beweglichen Ring (8) besteht, die vom Motorblock (2) getragen werden.

3. Mixer oder Rührgerät nach Anspruch 2, **dadurch gekennzeichnet, dass** der Körper (7) mit dem beweglichen Ring (8) über drei gelenkig gelagerte Haken (9) verbunden ist, so dass, wenn der bewegliche Ring hineingedrückt wird, sich dieser dreht und in einer Drehbewegung nach unten geht, nachdem die gelenkig gelagerten Haken (9) gleichzeitig geschwenkt haben.

4. Mixer oder Rührgerät nach Anspruch 3, **dadurch gekennzeichnet, dass** sich auf dem oberen Teil des Motorblocks (2) drei Höhlungen (10) befinden, die drei entsprechende Vorsprünge (11) aufnehmen, die auf der Basis (6) des Behälters vorhanden sind.

5. Mixer oder Rührgerät nach Anspruch 4, **dadurch gekennzeichnet, dass** der bewegliche Ring (8) unter Einwirkung dreier Federn (12) in eine Ruheposition, die so genannte "obere" Position, zurückgeführt wird, und **dadurch**, dass, wenn sich der bewegliche Ring (8) in der "oberen" Position befindet, jede Feder (12) über den beweglichen Ring (8) auf einen der gelenkig gelagerten Haken (9) einwirkt, indem sie diese zum Zurückschwenken zwingt.

6. Mixer oder Rührgerät nach Anspruch 5, **dadurch gekennzeichnet, dass**, wenn man die Behältereinheit (3) an den Motorblock (2) koppelt, die gelenkig gelagerten Haken (9) schwenken, wobei ihre klauenförmigen Enden (9a) in die Ränder (11a) der Vorsprünge (11) der Basis (6) des Behälters einhaken und sie dabei zurückhalten.

7. Mixer oder Rührgerät nach Anspruch 6, **dadurch gekennzeichnet, dass** am Anschlag der Ankopplung der Behältereinheit (3) an den Motorblock (2) der bewegliche Ring (8) von einem Zapfen (13) zurückgehalten wird, der in einen Zahn (8a) eingreift, der vom beweglichen Ring (8) vorragt.

8. Mixer oder Rührgerät nach Anspruch 7, **dadurch gekennzeichnet, dass** der Zapfen (13) gelenkig auf einer Achse gelagert ist, die in die Wand des Körpers (7) integriert ist, und dass er mit einem biegsamen Stift (13a) ausgestattet ist, der wie eine Feder wirkt und der sie gegen den beweglichen Ring (8) gedrückt hält.
